# EUROPEAN PATENT SPECIFICATION

(11) **EP 3 007 932 B1**
(45) Date of publication and mention of the grant of the patent: **08.05.2024**
(21) Application number: 14729655.2
(22) Date of filing: 12.06.2014
(51) Int. Cl.: B60J 5/04, E05F 15/73, B60Q 1/32, B60Q 9/00, B60W 50/00

(54) **DOOR PROTECTION SYSTEM**
TÜRENSCHUTZSYSTEM
SYSTEME DE PROTECTION DE PORTIERE

(30) Priority: 14.06.2013 GB 201310628
(43) Date of publication of application: 20.04.2016
(73) Proprietor: Jaguar Land Rover Limited, Coventry, Warwickshire CV3 4LF (GB)
(72) Inventor: SENGUTTUVAN, Ganesh, Coventry Warwickshire CV3 4LF (GB); RATHOD, Devarshi, Coventry Warwickshire CV3 4LF (GB); PICKERING, Carl, Coventry Warwickshire CV3 4LF (GB); WIDDOWSON, Paul, Coventry Warwickshire CV3 4LF (GB); CUND, Mark, Coventry Warwickshire CV3 4LF (GB)
(74) Representative: Jaguar Land Rover Patents Department
(86) International application number: PCT/EP2014/062178
(87) International publication number: WO 2014/198803

(56) References cited:
- WO-A1-2004/071815
- DE-A1-102005 014 581
- DE-A1-102011 010 242
- GB-A- 2 491 258
- JP-A- H10 176 462
- JP-A- 2006 103 526
- JP-A- 2007 148 618
- JP-A- 2012 001 210
- US-A1- 2005 280 284
- US-A1- 2010 251 283
- US-A1- 2013 113 614

## Description

### TECHNICAL FIELD

The present invention relates to a door protection system; a method of protecting a vehicle door; and a vehicle.

### BACKGROUND OF THE INVENTION

There remains a common problem that vehicle doors can be damaged due to inadvertent opening into another object or obstruction. This is a particular problem when there is limited space available, for example in a parking bay where there may be insufficient space available to open fully the vehicle door. It is common practice for vehicle door hinges to define a brake or stop position for holding the vehicle door at an interim position. However, damage may still occur if the vehicle door is opened beyond the stop position. This may occur, for example, if the available space is misjudged by the individual opening the vehicle door.

A related problem is the opening of vehicle doors into the path of oncoming vehicles, such as motor vehicles, motorcycles and bicycles.

US 2005/280284 A1 discloses a door brake that acts gradually to apply greater braking action as a door approaches an obstacle.

At least in certain embodiments, the present invention seeks to overcome or ameliorate problems associated with the prior art arrangements.

### SUMMARY OF THE INVENTION

According to a first aspect of the present invention there is provided a door protection system comprising the features of claim 1.

According to a second aspect of the present invention there is provided a door protection method comprising the features of claim 9.

The dependent claims relate to advantageous embodiments.

### BRIEF DESCRIPTION OF THE DRAWINGS

An embodiment of the present invention will now be described, by way of example only, with reference to the accompanying Figures, in which:
Figure 1 shows a schematic representation of a vehicle incorporating a door protection system in accordance with an embodiment of the present invention;
Figure 2 illustrates the calculation of the lateral displacement of an outer edge of a vehicle door;
Figure 3 illustrates the functional relationship between the components of the door protection system shown in Figure 1; and
Figure 4 illustrates the type of scenarios in which the door protection system according to an embodiment of the present invention is operative.

### DETAILED DESCRIPTION OF AN EMBODIMENT

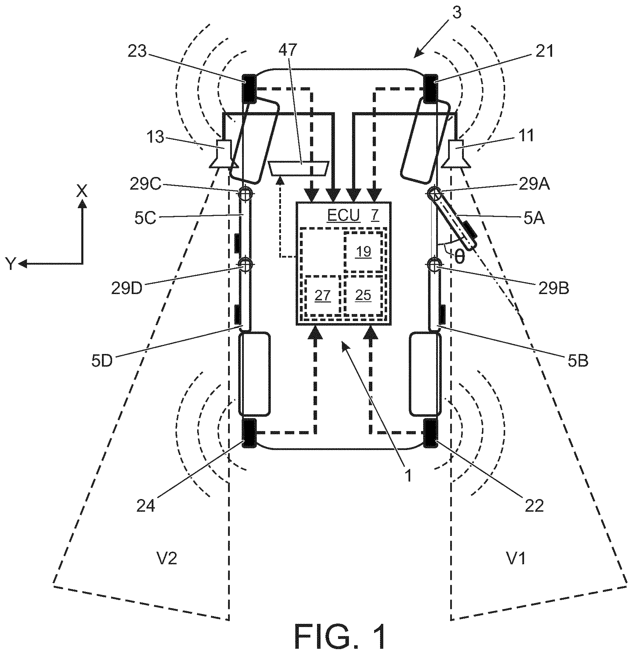

A door protection system 1 for a motor vehicle 3 in accordance with an embodiment of the present invention will now be described with reference to Figures 1 to 4. The motor vehicle 3 comprises a plurality of doors 5A-D for occupant ingress/egress. As described herein, the door protection system 1 is operative to protect the doors 5A-D from damage. For example, the door protection system 1 can help reduce the likelihood of a user opening one of the doors 5A-D into a fixed obstruction or into the path of an approaching vehicle.

The door protection system 1 comprises an electronic control unit 7 in communication with first and second optical cameras 11, 13. The optical cameras 11, 13 are disposed in the right and left wing mirrors 15, 17 respectively and are arranged to face towards the rear of the vehicle 3. The image field of each camera 11, 13 encompasses a region extending along the side and to the rear of the vehicle 3, as illustrated by the dashed regions V1, V2 shown in Figure 1. The cameras 11, 13 thereby capture image data of the regions disposed laterally and behind the vehicle 3. The image data is output to the electronic control unit 7 for analysis by an image processing unit 19 to identify moving objects, such as motor vehicles, motor bikes and bicycles, approaching from the rear of the subject vehicle 3. The door protection system 1 could comprise additional sensors (not shown) for detecting approaching vehicles. The use of radar and/or laser detection systems may be appropriate to provide an increased detection range.

The vehicle 3 also comprises first, second, third and fourth parking sensors 21-24 in communication with a parking assist module 25 provided in the electronic control unit 7. The parking sensors 21-24 can detect objects of interest, such as walls, other vehicle, road/path users etc. The parking sensors 21-24 may generate clutter (noise) which is not attributable to a valid (real) object and this can be filtered by the parking assist module 25. The parking assistance module 25 can also identify objects which don't pose a risk to the vehicle doors 5A-D or the vehicle (these are classed as non-threats). The door protection system 1 seeks to identify those objects which will partially or completely obstruct opening of one or more of the vehicle doors 5A-D and these objects are referred to herein as obstructions. The parking sensors 21-24 in the present embodiment are sonar devices mounted in the front and rear bumpers (not shown) and have an operating range of approximately 2-3 metres. The first and second parking sensors 21, 22 are operative to detect obstructions on the right hand side of the vehicle 3; and the third and fourth parking sensors 23, 24 are operative to detect obstructions on the left hand side of the vehicle 3. It will be appreciated that additional parking sensors can be provided to detect obstructions in front of and behind the vehicle 3.

in the present embodiment, the parking sensors 21-24 are configured to detect the lateral distance d1 to obstructions located on each side of the vehicle 3. A measurement signal is output from each parking sensor 21-24 to the electronic control unit 7. The door protection system 1 defines first and second virtual walls W extending parallel to a longitudinal axis X of the vehicle 3 on respective sides of the vehicle 3. The virtual walls W are offset from the side of the vehicle 3 by a distance equal to the smallest lateral distance d1 measured by the parking sensors 21-24 on that side of the vehicle 3.

The parking sensors 21-24 can detect the obstruction(s) when the vehicle 3 is stationary. Alternatively, or in addition, the parking sensors 21-24 can detect the obstruction(s) as the vehicle 3 is parked. The parking sensors 21-24 can detect the obstruction(s) as the vehicle 3 decelerates and comes to a standstill temporarily or for a short period of time, for example to allow an occupant to exit the vehicle 3. For example, the parking sensors 21-24 could be activated to identify said obstruction(s) as the vehicle 3 is parked under the automated control of the parking assist module 25.

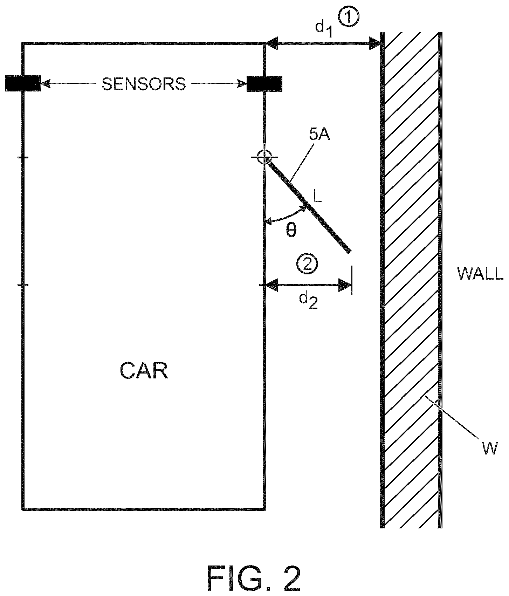

The electronic control unit 7 comprises a storage device in the form of memory 27 in which vehicle dimensions, including the length of each door 5A-D, are stored. The door opening angle θ is measured by angular sensors 29A-D associated with each door 5A-D and output to the electronic control unit 7. The angular sensors 29A-D can, for example, comprise a rotary position sensor or a Hall effect sensor. The position of the door 5A-D in relation to the virtual wall W defined on that side of the vehicle 3 can be calculated by the electronic control unit 7. As illustrated in Figure 2, a lateral offset d2 of an outer edge of the door 5A-D can be determined by the trigonometric function Sin θ = d2/L, where L is the known length of the door 5A-D and θ is the measured door opening angle.

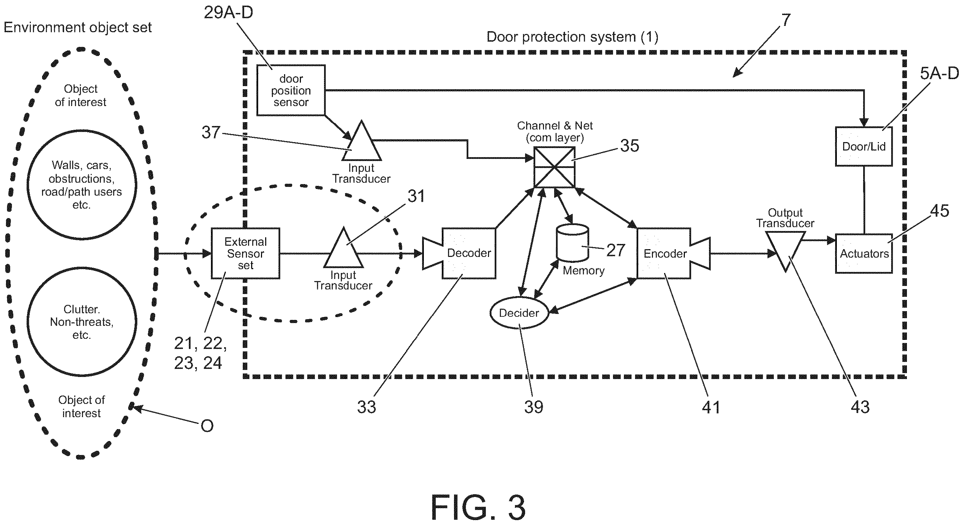

The operation of the door protection system 1 will now be described with reference to Figure 3. The door protection system 1 is represented schematically and the transfer of data between the modules within the electronic control unit 7 is illustrated by transfer arrows. For the sake of brevity, the operation will be described with reference to the first door 5A disposed on the right hand side of the vehicle 3. It will be appreciated that the same techniques can be implemented for each of the other doors 5B-D.

The first and second parking sensors 21, 22 are operative to detect one or more obstructions O positioned on the right hand side of the vehicle 3. The first and second parking sensors 21, 22 output respective first and second detection signals to a first input transducer 31 provided in the electronic control unit 7. The first input transducer 31 transmits the detection signals to a decoder 33 which decodes the detection signals to generate distance data corresponding to the distance between the vehicle 3 and each obstruction O identified by the first and second parking sensors 21, 22. The decoder 33 publishes the distance data to a communication network 35, such as a vehicle Controller Area Network (CAN) bus.

The first angular sensor 29A is operative to measure the door opening angle θ of the first door 5A. The first angular sensor 29A outputs an angular signal to a second input transducer 37. The second input transducer 37 publishes angular data to the communication network 35 corresponding to the door opening angle θ.

A decision module 39 retrieves the distance data and the angular data from the communication network 35. The decision module 39 identifies the smallest lateral distance d1 between the vehicle 3 and an obstruction identified by the first and second parking sensors 21, 22. The decision module 39 defines the virtual wall W at a lateral position corresponding to the smallest lateral distance d1 on that side of the vehicle 3. This process is repeated for both sides of the vehicle 3 to define the relative positions of the first and second virtual walls W. The decision module 39 interrogates the memory 27 to determine the length L of the first door 5A. Using the trigonometry techniques described herein, the decision module 39 calculates the lateral offset d2 of an outer edge of the first door 5A. A comparison is made between the lateral distance d1 and the lateral offset d2 of the outer edge of the door 5A. The decision module 39 generates a notification signal based on the comparison and the notification signal is output to an encoder 41 and an encoded signal is transmitted to an output transducer 43. The output transducer 43 is configured to control an actuator 45 disposed with the first door 5A. The actuator 45 is operative to control the opening of the first door 5A, by applying a resistive force to inhibit opening, if the lateral offset d2 approaches the lateral distance d1. The magnitude of the resistive force could be inversely proportional to the determined difference between the lateral distance d1 and the lateral offset d2. Alternatively, or in addition, the difference between the lateral distance d1 and the lateral offset d2 could be calculated and the actuator 45 operated when the difference is less than or equal to a predefined threshold.

The first angular sensor 29A continues to monitor the door opening angle θ. The first and second parking sensors 21, 22 continue to detect the presence of obstructions and can update the position of the virtual wall W in relation to the vehicle 3 substantially in real time. For example, if the measured distance to the nearest obstruction increases or decreases, the position of the virtual wall can be modified accordingly. In use, the decision module 39 can receive feedback from both the first angular sensor 29A and the first and second parking sensors 21, 22. The actuator 45 is controlled in dependence on the output from the encoder 41.

The door protection system 1 can optionally be configured to activate a display screen 47 to display a video image from one or both of the cameras 11, 13. The display screen 47 can be positioned on a headrest or a dashboard of the vehicle 3. The door protection system 1 can be configured to monitor on-board vehicle systems to predict when an occupant will open one of the doors 5A-D to exit the vehicle 3. For example, the door protection system 1 can be activated by detection of a hand proximal to the door handle and/or unbuckling of a seat belt. Upon detection of an action indicative of the occupant preparing to exit the vehicle, the door protection system 1 can automatically activate the display screen 47 to display the video image from the video camera(s) 11, 13. The door protection system 1 can thereby provide the occupant with an alternate view of the exterior of the vehicle before the vehicle door 5A-D is opened. The door protection system 1 could be configured to select which video image is displayed based on detection of a moving object in the video image. Alternatively, a particular camera 11, 13 could be associated with each door 5A-D and the video image from that camera 11, 13 displayed when the door protection system 1 determines that the occupant is about to open the door 5A-D. The door protection system 1 could be activated only when the vehicle 3 is stationary. The door protection system 1 could be modified to output the video image from an exterior camera 1, 13 as the vehicle door 5A-D is opened, for example when the door handle is operated and/or a change in the door opening angle θ is detected.

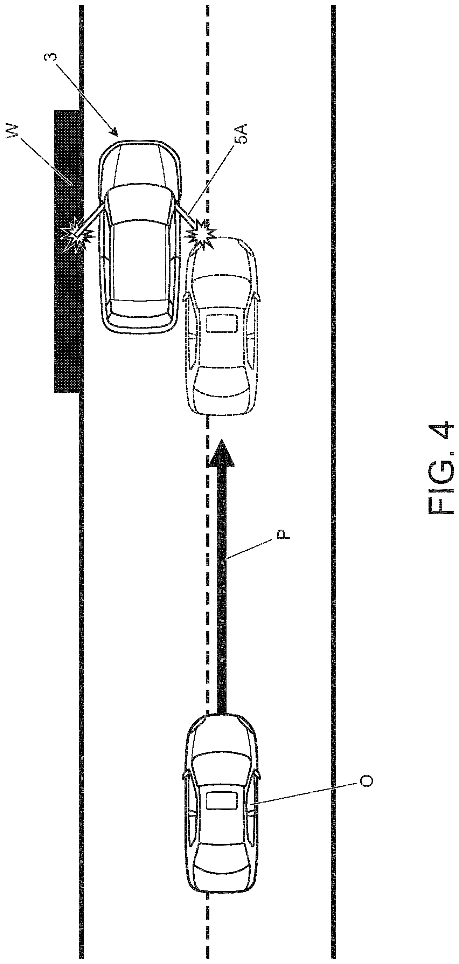

The door protection system 1 can also be configured to utilise the image data from the first and second cameras 11, 13 to protect the vehicle doors 5A-D. The image data from the cameras 11, 13 can be output to the electronic control unit 7 for analysis by the image processing unit 19. The image processing unit 19 is configured to identify moving objects within the image data and can predict a trajectory or path P of the object, as illustrated in Figure 4. The decision module 39 determines if the vehicle door 5A will open into the predicted path P of the object and, if so, a notification signal is output to the encoder 41. The encoder 41 transmits an encoded signal to the output transducer 43 which is configured to control the actuator 45. The actuator 45 is operative to control the opening of the first door 5A, for example by applying a resistive force to inhibit opening.

It will be appreciated that various changes and modifications can be made to the door protection system 1 described herein without departing from the present invention. For example, the embodiment has been described with particular reference to the vehicle doors 5A-D configured for occupant ingress/egress to the vehicle. In alternate embodiments, the door protection system 1 could be configured to protect other vehicle doors, such as an engine cover (bonnet) 7 and/or a trunk (boot) door 9.

## Claims

1. A door protection system (1) for a door (5A-D) of a vehicle (3), the door protection system comprising a processor (7) configured to:
receive obstruction data identifying the position of one or more obstructions in relation to the vehicle;
determine the proximity of the vehicle door to the obstruction(s); and
output a notification signal based on the determined proximity, wherein the notification signal is output to a drive mechanism (45) for inhibiting or restricting opening of the vehicle door and causes the drive mechanism to apply a resistive force to the vehicle door; the resistive force being varied in dependence on the proximity of the vehicle door to the obstruction(s),
**characterised in that**
the notification signal is output to an output transducer (43) comprising a haptic device for generating a user notification, wherein the haptic device comprises a door lock actuator configured to cycle between unlocked and locked positions in dependence on said notification signal from the processor.

2. A door protection system (1) as claimed in any preceding claim, wherein the processor (7) is configured to:
receive a door position signal; and
determine the proximity of the vehicle door (5A-D) to the obstruction(s) based on said door position signal in combination with said obstruction data.

3. A door protection system (1) as claimed in any preceding claim, wherein the notification signal indicates an offset between an outer edge of the vehicle door (5A-D) and the obstruction(s).

4. A door protection system (1) as claimed in claim 3, wherein the processor (7) is configured to calculate the position of the outer edge of the vehicle door based on the door position signal and stored geometric data relating to the vehicle door.

5. A door protection system (1) as claimed in any preceding claim, wherein the obstruction data identifies a longitudinal position and/or lateral position and/or vertical position of the obstruction(s) in relation to the vehicle (3).

6. A door protection system (1) as claimed in any preceding claim, wherein the notification signal is output to an output transducer (43) comprising one or more of the following: an audio device; and a visual device, for generating a user notification.

7. A door protection system (1) as claimed in any preceding claim, wherein the output transducer is configured to modify the user notification based on the determined proximity of the vehicle door (5A-D) to the obstruction(s).

8. A vehicle (3) comprising a door protection system (1) as described in any one of the preceding claims.

9. A method of protecting a vehicle door (5A-D), the method comprising:
receiving obstruction data identifying the position of one or more obstructions in relation to the vehicle;
determining the proximity of the vehicle door to the obstruction(s); and
outputting a notification signal based on the determined proximity, wherein the notification signal is output to a drive mechanism (45) for inhibiting or restricting opening of the vehicle door and causing the drive mechanism to apply a resistive force to the vehicle door; the resistive force being varied in dependence on the proximity of the vehicle door to the obstruction(s),
**characterised in that**
the notification signal is output to an output transducer (43) comprising a haptic device for generating a user notification, the haptic device comprising a door lock actuator configured to cycle between unlocked and locked positions in dependence on said notification signal from the processor.

## Patentansprüche

1. Türschutzsystem (1) für eine Tür (5A-D) eines Fahrzeugs (3), das Türschutzsystem umfassend einen Prozessor (7), der konfiguriert ist zum:
Empfangen von Hindernisdaten, die die Position eines oder mehrerer Hindernisse in Bezug auf das Fahrzeug identifizieren;
Bestimmen der Nähe der Fahrzeugtür zu dem/den Hindernis(sen); und
Ausgeben eines Benachrichtigungssignals basierend auf der bestimmten Nähe, wobei das Benachrichtigungssignal an einen Antriebsmechanismus (45) zum Hemmen oder Begrenzen eines Öffnens der Fahrzeugtür ausgegeben wird und bewirkt, dass der Antriebsmechanismus eine Widerstandskraft auf die Fahrzeugtür ausübt; wobei die Widerstandskraft in Abhängigkeit von der Nähe der Fahrzeugtür zu dem/den Hindernis(sen) variiert wird,
**dadurch gekennzeichnet, dass**
das Benachrichtigungssignal an einen Ausgabewandler (43) ausgegeben wird, umfassend eine haptische Vorrichtung zum Erzeugen einer Benutzerbenachrichtigung, wobei die haptische Vorrichtung einen Türverriegelungsaktuator umfasst, der konfiguriert ist, um zwischen entriegelten und verriegelten Positionen in Abhängigkeit von dem Benachrichtigungssignal von dem Prozessor umzuschalten.

2. Türschutzsystem (1) nach einem der vorstehenden Ansprüche, wobei der Prozessor (7) konfiguriert ist zum:
Empfangen eines Türpositionssignals; und
Bestimmen der Nähe der Fahrzeugtür (5A-D) zu dem/den Hindernis(sen) basierend auf dem Türpositionssignal in Kombination mit den Hindernisdaten.

3. Türschutzsystem (1) nach einem der vorstehenden Ansprüche, wobei das Benachrichtigungssignal einen Versatz zwischen einer Außenkante der Fahrzeugtür (5A-D) und dem/den Hindernis(sen) angibt.

4. Türschutzsystem (1) nach Anspruch 3, wobei der Prozessor (7) konfiguriert ist, um die Position der Außenkante der Fahrzeugtür basierend auf dem Türpositionssignal und gespeicherten geometrischen Daten, die sich auf die Fahrzeugtür beziehen, zu berechnen.

5. Türschutzsystem (1) nach einem der vorstehenden Ansprüche, wobei die Hindernisdaten eine Längsposition und/oder seitliche Position und/oder vertikale Position des/der Hindernisse(s) in Bezug auf das Fahrzeug (3) identifizieren.

6. Türschutzsystem (1) nach einem der vorstehenden Ansprüche, wobei das Benachrichtigungssignal an einen Ausgabewandler (43) ausgegeben wird, umfassend eines oder mehrere der Folgenden: eine Audiovorrichtung; und eine visuelle Vorrichtung zum Erzeugen einer Benutzerbenachrichtigung.

7. Türschutzsystem (1) nach einem der vorstehenden Ansprüche, wobei der Ausgabewandler konfiguriert ist, um die Benutzerbenachrichtigung basierend auf der bestimmten Nähe der Fahrzeugtür (5A-D) zu dem/den Hindernis(sen) zu modifizieren.

8. Fahrzeug (3), umfassend ein Türschutzsystem (1) nach einem der vorstehenden Ansprüche.

9. Verfahren zum Schützen einer Fahrzeugtür (5A-D), das Verfahren umfassend:
Empfangen von Hindernisdaten, die die Position eines oder mehrerer Hindernisse in Bezug auf das Fahrzeug identifizieren;
Bestimmen der Nähe der Fahrzeugtür zu dem/den Hindernis(sen); und
Ausgeben eines Benachrichtigungssignals basierend auf der bestimmten Nähe, wobei das Benachrichtigungssignal an einen Antriebsmechanismus (45) zum Hemmen oder Begrenzen eines Öffnens der Fahrzeugtür ausgegeben wird und Bewirken, dass der Antriebsmechanismus eine Widerstandskraft auf die Fahrzeugtür ausübt; wobei die Widerstandskraft in Abhängigkeit von der Nähe der Fahrzeugtür zu dem/den Hindernis(sen) variiert wird,
**dadurch gekennzeichnet, dass**
das Benachrichtigungssignal an einen Ausgabewandler (43) ausgegeben wird, umfassend eine haptische Vorrichtung zum Erzeugen einer Benutzerbenachrichtigung, die haptische Vorrichtung umfassend einen Türverriegelungsaktuator, der konfiguriert ist, um zwischen entriegelten und verriegelten Positionen in Abhängigkeit von dem Benachrichtigungssignal von dem Prozessor umzuschalten.

## Revendications

1. Système de protection de portière (1) pour une portière (5A-D) d'un véhicule (3), le système de protection de portière comprenant un processeur (7) configuré pour :
recevoir des données d'obstruction identifiant la position d'une ou plusieurs obstructions par rapport au véhicule ;
déterminer la proximité de la portière de véhicule avec la ou les obstructions ; et
sortir un signal de notification sur la base de la proximité déterminée, dans lequel le signal de notification est sorti vers un mécanisme d'entraînement (45) pour empêcher ou restreindre l'ouverture de la portière de véhicule et amener le mécanisme d'entraînement à appliquer une force de résistance à la portière de véhicule ; la force de résistance étant modifiée en fonction de la proximité de la portière de véhicule avec la ou les obstructions,
**caractérisé en ce que**
le signal de notification est sorti vers un transducteur de sortie (43) comprenant un dispositif haptique pour générer une notification d'utilisateur, dans lequel le dispositif haptique comprend un actionneur de verrouillage de portière configuré pour réaliser un cycle entre des positions déverrouillée et verrouillée en fonction dudit signal de notification provenant du processeur.

2. Système de protection de portière (1) selon l'une quelconque revendication précédente, dans lequel le processeur (7) est configuré pour :
recevoir un signal de position de portière ; et
déterminer la proximité de la portière de véhicule (5A-D) avec la ou les obstructions sur la base dudit signal de position de portière en association avec lesdites données d'obstruction.

3. Système de protection de portière (1) selon l'une quelconque revendication précédente, dans lequel le signal de notification indique un décalage entre un bord externe de la portière de véhicule (5A-D) et la ou les obstructions.

4. Système de protection de portière (1) selon la revendication 3, dans lequel le processeur (7) est configuré pour calculer la position du bord externe de la portière de véhicule sur la base du signal de position de portière et de données géométriques stockées relatives à la portière de véhicule.

5. Système de protection de portière (1) selon l'une quelconque revendication précédente, dans lequel les données d'obstruction identifient une position longitudinale et/ou une position latérale et/ou une position verticale de la ou des obstructions par rapport au véhicule (3).

6. Système de protection de portière (1) selon l'une quelconque revendication précédente, dans lequel le signal de notification est sorti vers un transducteur de sortie (43) comprenant un ou plusieurs des éléments suivants : un dispositif audio ; et un dispositif visuel, pour générer une notification d'utilisateur.

7. Système de protection de portière (1) selon l'une quelconque revendication précédente, dans lequel le transducteur de sortie est configuré pour modifier la notification d'utilisateur sur la base de la proximité déterminée de la portière de véhicule (5A-D) avec la ou les obstructions.

8. Véhicule (3) comprenant un système de protection de portière (1) selon l'une quelconque des revendications précédentes.

9. Procédé de protection d'une portière de véhicule (5A-D), le procédé comprenant :
la réception de données d'obstruction identifiant la position d'une ou plusieurs obstructions par rapport au véhicule ;
la détermination de la proximité de la portière de véhicule avec la ou les obstructions ; et
la sortie d'un signal de notification sur la base de la proximité déterminée, dans lequel le signal de notification est sorti vers un mécanisme d'entraînement (45) pour empêcher ou restreindre l'ouverture de la portière de véhicule et amener le mécanisme d'entraînement à appliquer une force de résistance à la portière de véhicule ; la force de résistance étant modifiée en fonction de la proximité de la portière de véhicule avec la ou les obstructions,
**caractérisé en ce que**
le signal de notification est sorti vers un transducteur de sortie (43) comprenant un dispositif haptique pour générer une notification d'utilisateur, le dispositif haptique comprenant un actionneur de verrouillage de portière configuré pour réaliser un cycle entre des positions déverrouillée et verrouillée en fonction dudit signal de notification provenant du processeur.
